# EUROPÄISCHE PATENTSCHRIFT

(11) **EP 2 982 841 B1**
(45) Veröffentlichungstag und Bekanntmachung des Hinweises auf die Patenterteilung: **05.04.2017**
(21) Anmeldenummer: 15168556.7
(22) Anmeldetag: 21.05.2015
(51) Int. Cl.: F01N 11/00, F01N 13/00, F01N 1/10, F01N 1/24

(54) **VERFAHREN ZUR ZUSTANDSÜBERWACHUNG EINES PARTIKELFILTERS, ABGASANLAGE UND MESSVORRICHTUNG**
METHOD FOR MONITORING THE STATE OF A PARTICULATE FILTER, EXHAUST SYSTEM AND MEASURING DEVICE
PROCÉDÉ DE SURVEILLANCE D'ÉTAT D'UN FILTRE À PARTICULES, SYSTÈME DE GAZ D'ÉCHAPPEMENT ET DISPOSITIF DE MESURE

(30) Priorität: 07.08.2014 DE 102014215659
(43) Veröffentlichungstag der Anmeldung: 10.02.2016
(73) Patentinhaber: Volkswagen Aktiengesellschaft, 38440 Wolfsburg (DE)
(72) Erfinder: Nikolaus, Norbert, 38533 Vordorf (DE); Pander, Sebastian, 38518 Gifhorn (DE); Haupt, Christoph, 38518 Gifhorn (DE)

(56) Entgegenhaltungen:
- DE-A1- 10 218 218
- JP-A- S60 224 914
- US-A1- 2013 047 841

## Beschreibung

Die Erfindung betrifft ein Verfahren zur Zustandsüberwachung eines in einem Abgaskanal angeordneten Partikelfilters mittels einer stromab des Partikelfilters angeordneten Messvorrichtung, wobei die Messvorrichtung einen Sensor und ein partikelaufnehmendes Material aufweist, welches den Sensor von einem durch den Partikelfilter strömenden Abgasstrom zumindest teilweise separiert. Ferner betrifft die Erfindung eine Abgasanlage, welche zur Durchführung des Verfahrens ausgebildet ist, sowie eine Messvorrichtung zur Durchführung des Verfahrens und/oder für die Abgasanlage.

Zur Emissionsverminderung von Verbrennungskraftmaschinen und zur Einhaltung aktueller Abgasgesetzgebungen kommen Abgassysteme mit mehreren Abgasnachbehandlungskomponenten zum Einsatz. So kann ein Abgassystem zur Verminderung von Emissionen einer mit Dieselkraftstoff betriebenen Verbrennungskraftmaschine beispielsweise einen Oxidationskatalysator, einen SCR-Katalysator (selektive katalytische Reduktion) und einen Partikelfilter (Dieselpartikelfilter, kurz: DPF) umfassen.

Der Einsatz von Partikelfiltern in Kraftfahrzeugen erfordert eine Funktions- also Effizienzüberwachung des Bauteils nach den Richtlinien der Emissionsgesetzgebung. Für eine solche Onboard-Diagnose des Partikelfilters werden zurzeit verschiedene Verfahren eingesetzt.

So konnte bisher eine ausreichende Überwachung durch ein Auswerten eines Differenzdruckes über den Partikelfilter gewährleistet werden. Dabei wird aufgrund des gemessenen Druckabfalls auf einen Funktionszustand des Partikelfilters geschlossen. Es wird also ein Strömungswiderstand des Partikelfilters bewertet und daraus auf eine Schädigung des Partikelfilters geschlossen.

Beispielsweise offenbart die DE 10 2011 077 097 A1 ein Verfahren zur Diagnose eines Partikelfilters, wobei eine Partikelfilter-Beladung mithilfe eines Partikelsensors, aus Differenzdruckmessungen und/oder aus einem Ruß-Beladungsmodell prognostiziert wird und aufgrund des Diagnoseergebnisses ein Regenerationsvorgang des Partikelfilters eingeleitet wird. Eine Validierung des Diagnoseergebnisses wird anhand einer Abhängigkeit der Partikelfilter-Beladung und eines Abgasvolumenstroms oder eines Gradienten des Abgasvolumenstroms durchgeführt und abhängig von dieser Validierung der Partikelfilter als funktionsfähig oder defekt oder das Diagnoseergebnis als nicht verwertbar eingestuft.

Ein anderes Verfahren beurteilt einen Beladungsanstieg im Partikelfilter auf Basis des Strömungswiderstandes über dem Partikelfilter (druckbasiert) im Vergleich mit einem erwarteten Beladungsanstieg, welcher auf einem Integral einer Rohrußemission basiert.

So offenbart die DE 10 2010 017 308 A1 ein Verfahren zum Bestimmen einer Notwendigkeit für die Ausführung einer Regenerierung eines Diesel-Feinstaubfilters. Eine Schätzung einer Rußbelastung innerhalb des Feinstaubfilters wird auf Basis einer Druckänderung zwischen einem Eingang des Feinstaubfilters und einem Ausgang des Feinstaubfilters vorgenommen. Eine größere Rußmenge innerhalb des Feinstaubfilters erzeugt dabei eine größere Druckänderung über dem Feinstaubfilter. Ein Rückhaltevermögen des Feinstaubfilters wird anhand einer zweimalig bestimmten Rückhaltemenge innerhalb des Feinstaubfilters und der zweimalig bestimmten Schätzung der Rußbelastung berechnet.

Ferner ist ein Verfahren bekannt, welches einen Strömungswiderstand eines zweiten, nachgelagerten Filters beurteilt. Der nachgelagerte Filter befindet sich in einem Abgasteilstrom, zum Beispiel in einer Abgasrückführungsstrecke.

Zudem sind auch Partikelsensoren bekannt, welche Rußpartikel direkt erkennen können. Partikelsensoren basieren auf einem (beheizbaren) Sensorelement, auf dem sich Ruß ablagert und dabei eine elektrische Verbindung zwischen zwei Elektroden herstellt. Sie erfordern jedoch eine aufwendige Signalauswertung in Form eines eigenständigen Steuergerätes. Durch diesen komplexen Aufbau steigen Ausfallwahrscheinlichkeit, Applikationsaufwand und Kosten. Sie sind bisher wenig erprobt. Insbesondere mangelt es an Langzeiterfahrung.

Die DE 102 18 218 A offenbart eine Vorrichtung und ein Verfahren zur Feststellung einer Fehlfunktion eines Rußfilters. Ferner offenbart die US 2013/0047841 A eine Vorrichtung und ein Verfahren zur Diagnose eines Partikelfilters in einer Abgasanlage einer Verbrennungskraftmaschine. Zudem offenbart die JP 60 224914 A eine Filtereinheit für einen Abgasdrucksensor.

Zusammenfassend kann festgestellt werden, dass die Überwachung der stark abgesenkten Schwellenwerte aktuell geltender oder nächster Stufen der Emissionsgesetzgebung in Europa und den USA mit den bisher bekannten Verfahren nicht mehr oder nur mit Einschränkungen darstellbar ist. Die Bewertung des Strömungswiderstandes des Partikelfilters selbst hat nicht genügend Trennschärfe, um einen geringen Schädigungsgrad zu erkennen, wie es zur Erfüllung von geltenden gesetzlichen Anforderungen erforderlich sein kann. Die Bewertung des Strömungswiderstands eines nachgelagerten Filters in einer Teilstrecke lässt sich nicht für alle Aufbauten von Abgasanlagen einsetzen. Die elektrischen Verfahren mit Sensorelementen (Partikelsensoren) sind sehr aufwendig und teuer, da es sich um aktive Sensoren mit komplexen Steuerungen handelt.

Der Erfindung liegt nun die Aufgabe zugrunde, ein Verfahren und Mittel zur verbesserten und kostengünstigeren Zustandsüberwachung eines Partikelfilters zur Verfügung zu stellen.

Erfindungsgemäß wird ein Verfahren zur Zustandsüberwachung eines in einem Abgaskanal angeordneten Partikelfilters mittels einer stromab des Partikelfilters angeordneten Messvorrichtung zur Verfügung gestellt Die Messvorrichtung weist einen Sensor und ein partikelaufnehmendes Material auf, welches den Sensor von einem durch den Partikelfilter strömenden Abgasstrom zumindest teilweise separiert, wobei das Verfahren die folgenden Schritte umfasst:
- Beaufschlagen der Messvorrichtung mit Abgas über ein Beladungs-Intervall;
- Erfassen einer Pulsation eines Signals des Sensors oder einer aus dem Signal abgeleiteten Größe;
- Vergleichen der Pulsation mit einer Referenzpulsation;
- Bewerten des Zustands des Partikelfilters in Abhängigkeit des Vergleichs und des Beladungs-Intervalls.
Kennzeichnend ist vorgesehen, dass der Sensor ein Drucksensor ist.

Durch das erfindungsgemäße Verfahren wird eine robuste Effizienzdiagnose des Partikelfilters für niedrige Emissionsgrenzwerte gewährleistet.

Mittels des partikelaufnehmenden Materials wird der Sensor (insbesondere eine Leitung des Sensors, welche einen messempfindlichen Teil des Sensors mit dem Abgaskanal verbindet) zumindest teilweise vom Abgasstrom separiert, also derart vom Abgasstrom getrennt, dass höchstens ein Teil des Abgasstroms in die Messvorrichtung vordringt. Das partikelaufnehmende Material ist vorzugsweise derart ausgebildet, dass es einerseits durchlässig für Gase ist, sich andererseits aber Rußpartikel darin ablagern können. Vorzugsweise ist das partikelaufnehmende Material ein Filtermaterial, insbesondere ein Edelstahlgewebe, welches derart feinmaschig ist, dass die Ablagerung von Rußpartikeln gewährleistet ist.

Die Pulsationen in dem Abgaskanal (einer Abgasanlage) werden durch einen (diskontinuierlichen) Abgasausstoß der Verbrennungskraftmaschine verursacht. Mittels des Sensors wird diese Pulsation erfasst und resultiert in einer Pulsation des von dem Sensor ausgegebenen Signals oder der von dem Signal abgeleiteten Größe. Bisher wurden die Pulsationen zwar von einem Sensor (Abgasdrucksensor) erfasst, jedoch wurden diese nicht entsprechend der Erfindung ausgewertet. Vielmehr wurde gemäß den bekannten Verfahren (zum Beispiel bei einer Differenzdruckmessung über einen Partikelfilter) lediglich ein Mittelwert des Signals oder der daraus abgeleiteten Größe verwendet. Die Pulsationen in der Abgasanlage werden auf dem Weg zum Sensor durch das partikelaufnehmende Material gedämpft, sodass auch das Signal oder die daraus abgeleitete Größe gedämpft werden.

Lagert sich Ruß an dem partikelaufnehmenden Material an, so nimmt die Dämpfung des erfassten (gemessenen) Signals oder der daraus abgeleiteten Größe zu. Der Ruß passiert den Partikelfilter zum Beispiel aufgrund eines Partikelschlupfs des Partikelfilters.

Mit anderen Worten ist das partikelaufnehmende Material somit derart zwischen dem Sensor und dem Abgasstrom angeordnet, dass bei einer zunehmenden Beladung des partikelaufnehmenden Materials die Pulsation des Abgasstroms (des Abgases) direkt am Sensor und somit die Pulsation des Signals des Sensors und die Pulsation der aus dem Signal abgeleiteten (also ermittelten) Größe zunehmend beeinflusst werden. Beispielsweise ist der Sensor (insbesondere eine Leitung des Sensors, welche einen messempfindlichen Teil des Sensors mit dem Abgaskanal verbindet) an einer Druckentnahmestelle mit dem Material überzogen, das partikelaufnehmende Material umschließt also den Sensor an der Druckentnahmestelle.

Die Pulsation des Signals oder der daraus abgeleiteten Größe bezeichnet also eine Pulsation des messtechnisch erfassten Signals oder der daraus abgeleiteten Größe. Durch die beeinflusste Pulsation folgt ein Verlauf des Signals des Sensors (zum Beispiel ein Spannungssignal) oder der aus dem Signal abgeleiteten Größe (zum Beispiel ein ermittelter Druck) einem tatsächlichen Verlauf einer zu messenden Größe (zum Beispiel einem Druck) nur mehr mit erhöhter Zeitverzögerung und abgeschwächter Amplitude der Pulsation.

Im Falle eines Defekts des Partikelfilters wird das partikelaufnehmende Material schneller als vor dem Defekt von Partikeln aus dem Abgasstrom beladen. Durch die Beladung des Materials ändert sich die Pulsation des Signals oder der daraus abgeleiteten Größe schneller als erwartet, was durch den Vergleich der Pulsation mit der Referenzpulsation festgestellt wird.

Das Bewerten des Zustands des Partikelfilters und/oder der Messeinrichtung erfolgt in Abhängigkeit des Vergleichs der Pulsation mit einer Referenzpulsation und in Abhängigkeit des Beladungs-Intervalls. Das Beladungs-Intervall kann sich dabei bis zu einem beliebig gewählten oder vorbestimmten Punkt in die Vergangenheit erstrecken. Es kann sich also zwischen diesem Punkt in der Vergangenheit und jenem Punkt erstrecken, in dem ein aktuelles Signal, das die Grundlage zum Bewerten des Zustands bildet, vom Sensor ausgegeben wird.

Der Sensor ist ein Drucksensor. Aktuelle Seriendrucksensoren (Abgasdrucksensoren) weisen eine hinreichend schnelle Signalbereitstellung auf und stellen keinen finanziellen Mehraufwand dar, da sie oftmals ohnehin stromab des Partikelfilters verbaut sind. Die aus dem Signal abgeleitete Größe ist somit ein (Abgas-)Druck und die im Abgas gemessenen Pulsationen sind somit Druckschwankungen des Abgasstroms.

Vorzugsweise ist vorgesehen, dass das Vergleichen der Pulsation mit der Referenzpulsation ein Vergleichen einer Amplitude der Pulsation mit einer Amplitude der Referenzpulsation, und/oder einer Phasenlage der Pulsation mit einer Phasenlage der Referenzpulsation umfasst. Zudem oder alternativ kann das Vergleichen einen Vergleich einer Steigung der Pulsation mit einer Steigung der Referenzpulsation umfassen, wobei die Steigung eine Steigung des Signals oder der daraus abgeleiteten Größe zwischen den Amplituden ist. Durch die Dämpfung der tatsächlichen Pulsation des Abgasstroms mittels des beladenen partikelaufnehmenden Materials sinkt die Amplitude des Signals und der daraus abgeleiteten Größe. Zudem findet eine Phasenverschiebung statt, sodass die Pulsation als Gesamtes in Richtung spät verschoben wird, also auch die Amplituden später ermittelt werden, als diese im Abgas tatsächlich auftreten. Typischerweise bleibt eine Periodendauer der Pulsation aber trotz der Dämpfung konstant, sodass eine Steigung zwischen den verringerten Amplituden ebenfalls verringert wird. Durch diese bevorzugte Ausgestaltung ist der Vergleich der Pulsation des Signals oder der daraus abgeleiteten Größe mit der Referenzpulsation auf eine besonders einfache Weise möglich.

Vorzugsweise ist vorgesehen, dass das Beladungs-Intervall ein Beladungs-Zeitintervall, ein Beladungs-Wegintervall und/oder ein Beladungs-Massenintervall umfasst oder ist. Während eine relativ geringe Änderung der Pulsation des Signals oder der daraus abgeleiteten Größe verglichen mit der Referenzpulsation innerhalb eines relativ langen Beladungs-Zeitintervalls wegen einer nicht hundertprozentigen Filterwirkung des Partikelfilters durchaus zulässig sein kann, kann eine relativ große Pulsationsänderung innerhalb eines relativ kurzen Beladungs-Zeitintervalls auf einen defekten Partikelfilter hindeuten. Mittels des Beladungs-Wegintervalls kann zudem eine Bewertung durchgeführt werden, welcher ein zurückgelegter Weg zugrunde liegt. Durch Heranziehen des Beladungs-Massenintervalls kann ferner eine Bewertung des Zustands durchgeführt werden, welcher einer Partikelmasse zugrunde liegt. Die Partikelmasse kann dabei eine bei korrekt funktionierendem Partikelfilter erwartete Partikelmasse am Ausgang des Partikelfilters sein. Diese kann beispielsweise mittels eines Rechenmodells ermittelt werden. Auch eine Kombination der genannten Intervalle kann von Vorteil sein, da es zum Beispiel von Belang sein kann, welche Partikelmasse in welcher Zeit ausgestoßen wurde.

Vorzugsweise ist das Beladungs-Intervall ein Intervall seit einer letzten Regeneration des partikelaufnehmenden Materials. Bei einer Regeneration des partikelaufnehmenden Materials, welche bevorzugt im Zuge einer Regeneration des Partikelfilters erfolgen kann, wird das partikelaufnehmende Material von an- oder eingelagerten Partikeln gereinigt. Somit entspricht die Pulsation des Signals oder der daraus abgeleiteten Größe am ehesten einer tatsächlich vorhandenen Pulsation, was den Vergleich mit der Referenzpulsation und/oder eine Bestimmung der Referenzpulsation erleichtert.

Vorzugsweise ist vorgesehen, dass der Abgasstrom von einer Verbrennungskraftmaschine ausgestoßen wird und das Bewerten des Zustands des Partikelfilters in Abhängigkeit von Betriebspunkten der Verbrennungskraftmaschine und/oder in Abhängigkeit eines Fahrprofils eines die Verbrennungskraftmaschine umfassenden Kraftfahrzeugs erfolgt. Die Betriebspunkte und das Fahrprofil liefern zusätzliche Informationen für eine genauere Bewertung des Zustands des Partikelfilters. So hängt eine Partikelrohemission einer Verbrennungskraftmaschine (also eine Partikelemission an einem Auslass der Verbrennungskraftmaschine) von den Betriebspunkten ab, mit welchen die Verbrennungskraftmaschine betrieben wird. Ferner hängt die Partikelrohemission von einem Fahrprofil ab, wenn die Verbrennungskraftmaschine zum Antrieb eines Kraftfahrzeugs dient.

Bevorzugt ist vorgesehen, dass die Referenzpulsation mittels eines Referenzsensors, mittels Kennlinien und/oder eines Rechenmodells ermittelt wird. Somit wird parallel zu der Messung mittels des Sensors, welche die Pulsation des Signals des Sensors oder der daraus abgeleiteten Größe liefert, noch eine weitere Messung mittels eines Referenzsensors durchgeführt, um die Referenzpulsation zu ermitteln. Ferner kann die Referenzpulsation mittels Kennlinien und/oder eines (Echtzeit-) Rechenmodells ermittelt werden. Zudem kann auch eine Kombination aus den genannten Möglichkeiten erfolgen. Beispielsweise kann ein von einem Referenzsensor ausgegebenes Signal mittels Kennlinien und/oder eines Rechenmodells derart korrigiert werden, dass es dem Signal des Sensors (mit dem partikelaufnehmenden Material) zu Beginn des Beladungs-Intervalls entspricht. Der Referenzsensor ist insbesondere stromauf des Partikelfilters angeordnet. Somit kann als Referenzsensor ein typischerweise ohnehin vorhandener Abgasdrucksensor verwendet werden. Dieser ohnehin vorhandene Drucksensor wird wie aus dem Stand der Technik bekannt üblicherweise zusammen mit einem stromab des Partikelfilters angeordneten Abgasdrucksensor für eine Differenzdruckmessung über dem Partikelfilter verwendet. Ferner bevorzugt kann der Referenzsensor unmittelbar stromauf oder stromab des Sensors angeordnet sein, sodass keine weiteren dämpfenden Bauteile zwischen dem Sensor und dem Referenzsensor vorhanden sind, wodurch ein Abgleich des Signals des Sensors mit dem Signal des Referenzsensors vereinfacht wird.

Vorzugsweise ist vorgesehen, dass bei einem unbeladenen, partikelaufnehmenden Material die Referenzpulsation der Pulsation des Signals des Sensors oder der Pulsation der aus dem Signal abgeleiteten Größe entspricht. Selbst bei einem unbeladenen partikelaufnehmenden Material kann die Pulsation des Signals oder der daraus abgeleiteten Größe aufgrund des Vorhandenseins des partikelaufnehmenden Materials eine geringere Pulsation als die vom Referenzsensor ausgegebene Referenzpulsation aufweisen. Um dies zu berücksichtigen, wird die Referenzpulsation bevorzugt bestimmt, indem zunächst eine Pulsation eines Signals oder einer daraus abgeleiteten Größe des Referenzsensors ermittelt wird. Anschließend wird diese Pulsation mittels eines Rechenmodells und/oder Kennlinien an die Pulsation des vom Sensor ausgegebenen Signals oder der daraus abgeleiteten Größe bei einem unbeladenen, partikelaufnehmenden Material angeglichen (also künstlich an die vom Sensor gelieferte Pulsation angepasst). Dadurch wird ein anschließender Vergleich der Pulsation des Signals des Sensors oder der daraus abgeleiteten Größe mit der Referenzpulsation vereinfacht. Alternativ oder zusätzlich könnte auch die Pulsation des Signals des Sensors oder der daraus abgeleiteten Größe eine bereits mittels eines Rechenmodells und/oder Kennlinien korrigierte Pulsation sein.

Vorzugsweise ist vorgesehen, dass das Signal des Sensors und/oder ein der Referenzpulsation zugrundeliegendes Referenzsignal ein gefiltertes Signal ist. Insbesondere sind die Signale mittels eines Bandpassfilters gefiltert. Dadurch werden für den Vergleich unwichtige oder störende überlagerte Pulsationen oder Schwingungen herausgefiltert. Bevorzugt umfasst der Bandpassfilter eine variable Mittenfrequenz, welche besonders bevorzugt von einer Drehzahl einer das Abgas ausstoßenden Verbrennungskraftmaschine abhängig ist. So ist die Mittenfrequenz insbesondere proportional zu der Drehzahl. Die Filterung erfolgt insbesondere nach einer Digitalisierung der Signale, sodass der Bandpassfilter ein digitaler Bandpassfilter ist.

Anstatt dass das Beladungs-Intervall ein Intervall seit einer letzten Regeneration des partikelaufnehmenden Materials ist, und die Referenzpulsation einer Pulsation des vom Sensor ausgegebenen Signals oder der daraus abgeleiteten Größe bei einem unbeladenen, partikelaufnehmenden Material entspricht, sind jedoch auch Alternativen vorstellbar. So kann das Beladungs-Intervall auch ein beliebig großes, zurückliegendes Intervall sein. Die Referenzpulsation kann dabei eine Pulsation sein, wie sie der Pulsation des vom Sensor ausgegebenen Signals oder der daraus abgeleiteten Größe zu Beginn des zurückliegenden Intervalls entspricht. Somit kann auch zwischen zwei Regenerationen eine Zunahme eines Partikelaustritts aus dem Partikelfilter festgestellt werden. Dadurch kann zum Beispiel bei manchen Partikelfiltern ein Regenerationsbedarf des Partikelfilters festgestellt werden.

Ferner wird eine Abgasanlage mit einem in einem Abgaskanal der Abgasanlage angeordneten Partikelfilter und einer stromab des Partikelfilters angeordneten Messvorrichtung zur Verfügung gestellt, wobei die Messvorrichtung einen Sensor, welcher ein Drucksensor ist, und ein partikelaufnehmendes Material aufweist, welches den Sensor von dem Abgaskanal zumindest teilweise separiert. Die Abgasanlage ist zur Durchführung des erfindungsgemäßen Verfahrens eingerichtet. Dazu kann die Abgasanlage ein Steuergerät (insbesondere ein Motorsteuergerät, welches zur Steuerung von Betriebsparametern der Verbrennungskraftmaschine eingerichtet ist) umfassen, auf welchem ein zur Durchführung des Verfahrens eingerichtetes Rechenmodell gespeichert ist. Alternativ oder ergänzend kann das Verfahren auch zumindest teilweise in einer anwendungsspezifischen, integrierten Schaltung (ASIC) des Sensors durchgeführt werden. Dadurch, dass das partikelaufnehmende Material den Sensor von dem Abgaskanal zumindest teilweise separiert, wird im Betrieb der Abgasanlage der Sensor von einem durch den Partikelfilter strömenden Abgas zumindest teilweise separiert. Insbesondere separiert das partikelaufnehmende Material eine (Druck-) Leitung des Sensors von dem Abgas. Somit wird eine Abgasanlage zur Verfügung gestellt, welche sich bei einer ausreichend genauen Zustandsüberwachung des Partikelfilters durch besonders geringe Kosten auszeichnet.

Vorzugsweise ist vorgesehen, dass die Messvorrichtung in einem Hauptabgaspfad der Abgasanlage angeordnet ist und sich nur teilweise in einen durchströmbaren Querschnitt des Hauptabgaspfads erstreckt. Vorzugsweise beträgt ein Anteil eines Querschnitts des in den Abgaskanal ragenden Teils der Messvorrichtung weniger als 20%, insbesondere weniger als 10% eines freien Querschnitts des Abgaskanals. Somit wird ein Strömungswiderstand bei einer Beladung des partikelaufnehmenden Materials nur unwesentlich erhöht.

Zudem wird eine Messvorrichtung zur Durchführung des erfindungsgemäßen Verfahrens und/oder für eine erfindungsgemäße Abgasanlage zur Verfügung gestellt. Die Messvorrichtung umfasst einen Sensor und ein partikelaufnehmendes Material, welches einen messempfindlichen Teil des Sensors (nach außen) abschirmt. Der Sensor ist ein Drucksensor und die Messvorrichtung umfasst eine Leitung zum Verbinden eines messempfindlichen Teils des Sensors mit dem Abgaskanal. Kennzeichnend ist vorgesehen, dass eine Öffnung in die Leitung von dem partikelaufnehmenden Material ummantelt ist. Somit ist das Material als eine Ummantelung ausgebildet. Mittels der erfindungsgemäßen Messvorrichtung kann das Verfahren bei besonders geringem Kostenaufwand, Strömungsverlust und geringer Strömungsverluständerung innerhalb des Abgaskanals durchgeführt werden. Somit ist die Messvorrichtung besonders rückwirkungsarm auf den Abgasstrom.

Das Material ummantelt die Öffnung in die (Druckzu-) Leitung des Sensors, wobei die Leitung dazu dient, den messempfindlichen Teil des Sensors mit einem Abgaskanal zu verbinden. Der (Druck-) Sensor kann also wie üblich über die Leitung (eine relativ dünne Druckzuleitung), z. B. aus Edelstahl, mit dem Abgaskanal verbunden sein. Ferner kann die Leitung mittels eines Gummischlauchs an den eigentlichen Sensor gekoppelt sein. Das partikelaufnehmende Material trennt somit im Betrieb der Messvorrichtung den messempfindlichen Teil des Sensors von dem Abgasstrom, indem sich das partikelaufnehmende Material an einem in den Abgasstrom ragenden Leitungsstück befindet und einen Eintrittsquerschnitt (die Öffnung) in die Druckzuleitung vollständig umschließt. Üblicherweise wird die Druckzuleitung nicht direkt durchströmt.

Vorzugsweise ist vorgesehen, dass das partikelaufnehmende Material Öffnungen durch die Ummantelung ausbildet, welche durch eine Beladung des partikelaufnehmenden Materials mit Partikeln aus dem Abgasstrom verschließbar sind. Somit werden offene Öffnungen in das und aus dem Inneren der Messvorrichtung bei einer Beladung des Materials mit Partikeln zunehmend reduziert, wodurch eine Beaufschlagung des Sensors (insbesondere die Öffnung der Leitung des Sensors) mit Abgas aus dem Abgasstrom verringert wird. Daraus folgt eine beabsichtigte Beeinflussung der Pulsation des Signals oder der daraus abgeleiteten Größe des Sensors.

Ferner wird ein Verfahren zur Zustandsüberwachung einer in einem Abgaskanal angeordneten, erfindungsgemäßen Messvorrichtung zur Verfügung gestellt, wobei das Verfahren die folgenden Schritte umfasst:
- Beaufschlagen der Messvorrichtung mit Abgas;
- Erfassen einer Pulsation eines Signals des Sensors oder einer aus dem Signal abgeleiteten Größe;
- Vergleichen der Pulsation mit einer Referenzpulsation;
- Bewerten des Zustands der Messvorrichtung in Abhängigkeit des Vergleichs.

Beispielsweise bei einem Entfernen des partikelaufnehmenden Materials ändert sich die Pulsation des Signals des Sensors oder der aus dem Signal abgeleiteten Größe in einer unerwarteten Weise derart, dass die Amplitude der Pulsation anwächst und die Phasenlage der Pulsation in Richtung früh verschoben wird. Mittels des Vergleichs mit der Referenzpulsation kann dies festgestellt und somit auf eine defekte Messeinrichtung geschlossen werden.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Abgasanlage in einer schematischen Ansicht,
- Figur 2: eine Messvorrichtung in einer schematischen Ansicht,
- Figur 3: einen schematischen Verfahrensablauf zur Zustandsüberwachung eines Partikelfilters,
- Figur 4: stark vereinfachte Druckverläufe, und
- Figur 5: stark vereinfachte Druckverläufe in drei verschiedenen Zeitbereichen.

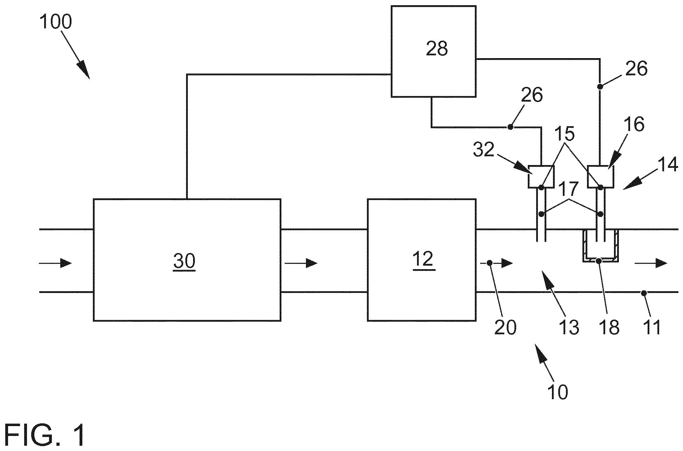

Figur 1 zeigt eine schematische Ansicht einer erfindungsgemäßen Abgasanlage 10 gemäß einer bevorzugten Ausgestaltung der Erfindung. Die Abgasanlage 10 umfasst einen Partikelfilter 12 (zum Beispiel ein Dieselpartikelfilter) und eine stromab des Partikelfilters 12 in einem Hauptabgaspfad 13 angeordnete Messvorrichtung 14. Somit passiert ein den Partikelfilter 12 verlassender Abgasstrom 20 im Anschluss die Messvorrichtung 14. Die Messvorrichtung 14 weist einen Sensor 16, welcher ein Drucksensor 16 (auch Abgasdrucksensor genannt) ist, und ein partikelaufnehmendes Material 18 (zum Beispiel ein Filtergewebe) auf. Das partikelaufnehmende Material 18 separiert den Sensor 16, im Speziellen einen messempfindlichen Teil 15 des Sensors 16, von einem durch den Partikelfilter 12 strömenden Abgasstrom 20 zumindest teilweise.

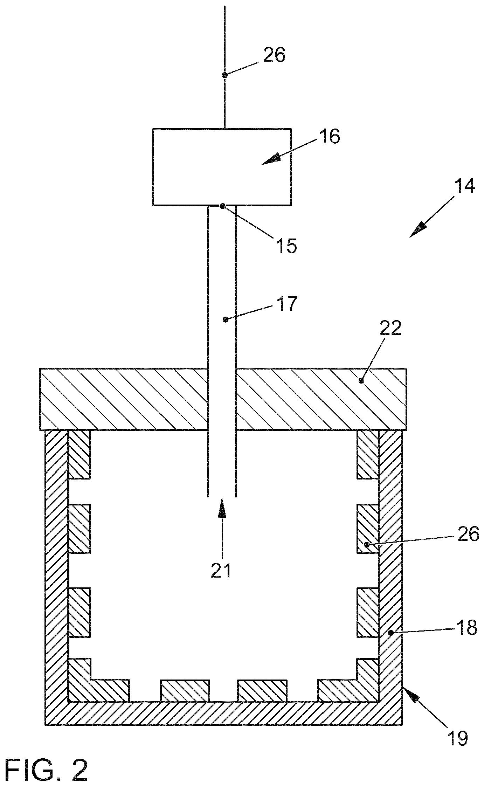

Der Sensor 16 ist in Figur 2 vergrößert dargestellt. Demnach ist eine Öffnung 21 einer Leitung 17, welche zu dem messempfindlichen Teil 15 des Sensors 16 führt, von dem partikelaufnehmenden Material 18 ummantelt. Die Messvorrichtung 14 umfasst ferner ein Gehäuse 22, welches in einen Abgaskanal 11 der Abgasanlage 10 eingeschraubt werden kann. Zudem umfasst der Sensor 16 eine Messleitung 26, mit der ein Signal des Sensors 16 ausgegeben werden kann. Das partikelaufnehmende Material 18 kann dabei optional auch auf einem perforierten Schutzrohr 26 der Messvorrichtung 14 angebracht sein, welches ebenfalls die Öffnung 21 umschließt. Alternativ kann das perforierte Schutzrohr 26 auch entfallen. Das partikelaufnehmende Material 18 bildet Öffnungen (nicht sichtbar) durch die Ummantelung 19 aus, welche durch eine Beladung des partikelaufnehmenden Materials 18 mit Partikeln (Rußpartikeln) aus dem Abgasstrom 20 verschließbar sind. Alternativ kann das partikelaufnehmende Material 18 auch mittels eines Schutzrohrs 26 mit einer ausreichend kleinen Perforation realisiert werden, sodass sich die Partikel direkt an der Perforation des Schutzrohrs 26 anlagern und diese verschließen.

Die Abgasanlage 10 gemäß Figur 1 umfasst ein Steuergerät 28, welches über die Messleitung 26 mit dem Sensor 16 verbunden ist. Zudem ist das Steuergerät 28 mit einer Verbrennungskraftmaschine 30 zum Beispiel eines Kraftfahrzeugs 100 verbunden. Das Steuergerät 28 bestimmt zum Beispiel in Abhängigkeit einer Vorgabe eines Fahrers des Kraftfahrzeugs 100 einen Betriebspunkt der Verbrennungskraftmaschine 30, also eine Last und eine Drehzahl der Verbrennungskraftmaschine 30, wodurch eine Partikelrohemission der Verbrennungskraftmaschine 30 beeinflusst wird.

Ferner kann die Abgasanlage 10 einen Referenzsensor 32 umfassen, welcher ebenfalls ein Drucksensor 16 (auch Abgasdrucksensor genannt) ist und mit dem Steuergerät 28 verbunden ist. Der Referenzsensor 32 kann wie dargestellt benachbart zum Sensor 16 (möglichst an der gleichen Position) angeordnet sein, damit am Referenzsensor 32 möglichst identische Druckverhältnisse wie am Sensor 16 herrschen. Ferner kann der Referenzsensor 32 jedoch auch stromauf des Partikelfilters 12 angeordnet sein, und somit ein für Differenzdruckmessungen ohnehin vorhandener Referenzsensor 32 verwendet werden. Dazu bedarf es jedoch einer aufwändigeren Korrektur eines Signals des Referenzsensors 32.

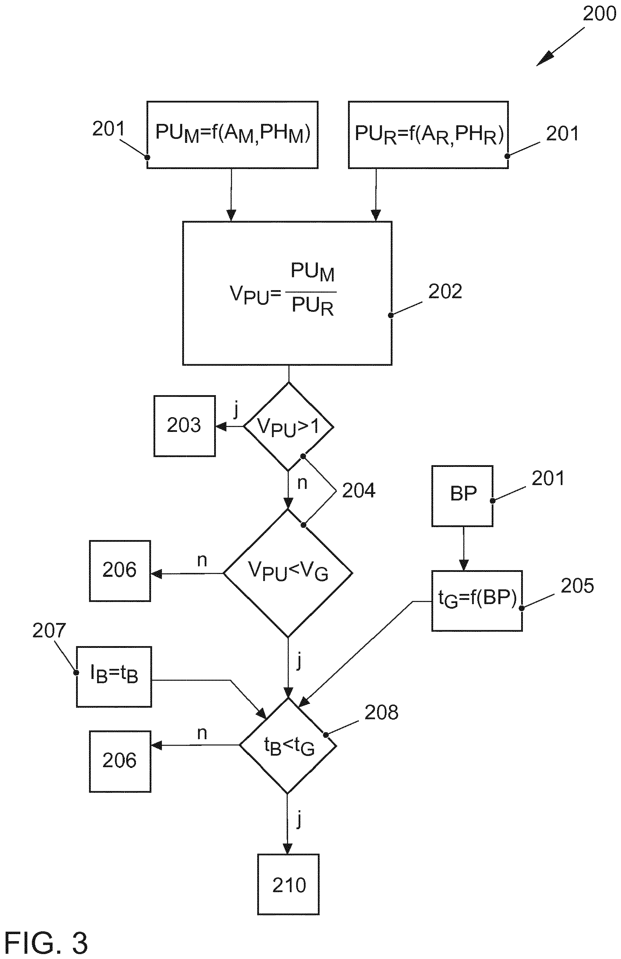

Figur 3 zeigt einen schematischen Verfahrensablauf zur Zustandsüberwachung eines Partikelfilters 12 gemäß einer bevorzugten Ausgestaltung der Erfindung. Das Verfahren kann beispielsweise als ein Computerprogramm am Steuergerät hinterlegt sein.

Zunächst wird die Verbrennungskraftmaschine 30 in Betrieb genommen, welche in Abhängigkeit angefahrener Betriebspunkte BP oder in Abhängigkeit eines Fahrprofils des Fahrzeugs 100 den Abgasstrom 20 mit darin enthaltenen Partikeln (Rußpartikeln) ausstößt.

Ein Großteil der Partikel wird von dem Partikelfilter 12 aus dem Abgasstrom 20 herausgefiltert. Typischerweise gelangt jedoch auch bei einem korrekt funktionierenden Partikelfilter 12 ein geringer Anteil an Partikeln in Teile der Abgasanlage 10 stromab des Partikelfilters 12. Dies wird allgemein als Partikelschlupf bezeichnet. Ein Teil der aus dem Partikelfilter 12 austretenden Partikel wird von dem partikelaufnehmenden Material 18 der Messvorrichtung 14 aufgenommen.

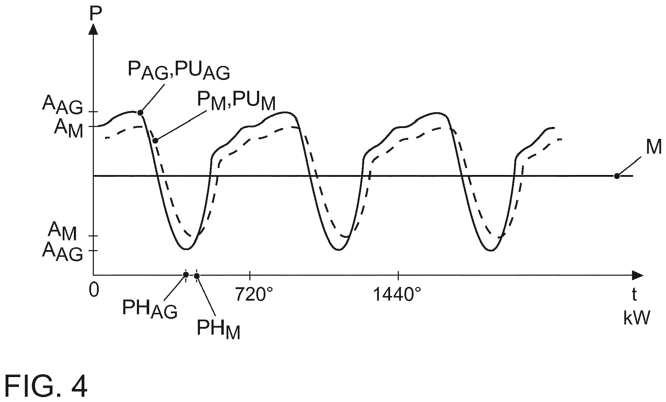

In Figur 4 ist zum einfacheren Verständnis und aus Gründen der Darstellbarkeit ein stark vereinfachter Verlauf eines Drucks P_{AG} des Abgasstroms 20 über der Zeit t aufgetragen. Der Druck P_{AG} ist zudem über dem Kurbelwinkel einer Kurbelwelle der Verbrennungskraftmaschine 30 aufgetragen, da sich Pulsationen PU_{AG} des Drucks P_{AG} (also Druckschwankungen) in dem dargestellten konstanten Lastpunkt der Verbrennungskraftmaschine nach jedem Zyklus periodisch wiederholen. Die Pulsationen PU_{AG} entstehen durch einen diskontinuierlichen Abgasausstoß der Verbrennungskraftmaschine.

Zudem ist in Figur 4 ein Druck P_{M} dargestellt, welcher eine aus einem Signal des Sensors 16 abgeleitete Größe, also ein Zahlenwert mit einer Einheit eines Drucks ist. Durch das Vorhandensein des partikelaufnehmenden Materials 18 werden Druckschwankungen am Sensor 16 gedämpft, wodurch auch das Signal des Sensors 16 und somit die daraus abgeleitete Größe (der Druck P_{M}) gedämpft wird. Die Dämpfung bewirkt eine Verringerung der Amplituden AM um einen Mittelwert M. Der Mittelwert M wird folgend als Mittelwert sowohl des Drucks P_{AG} des Abgasstroms 20 als auch des Drucks P_{M} angesehen. Ferner bewirkt das Vorhandensein des partikelaufnehmenden Materials 18 auch eine Verschiebung einer Phasenlage PH_{M} der Pulsation PU_{M} des Drucks P_{M} verglichen mit einer Phasenlage PH_{AG} der Pulsation PU_{AG} des Abgasstroms 20, sodass sich eine Phasenverschiebung zwischen den beiden Pulsationen PU_{M} und PU_{AG} ergibt.

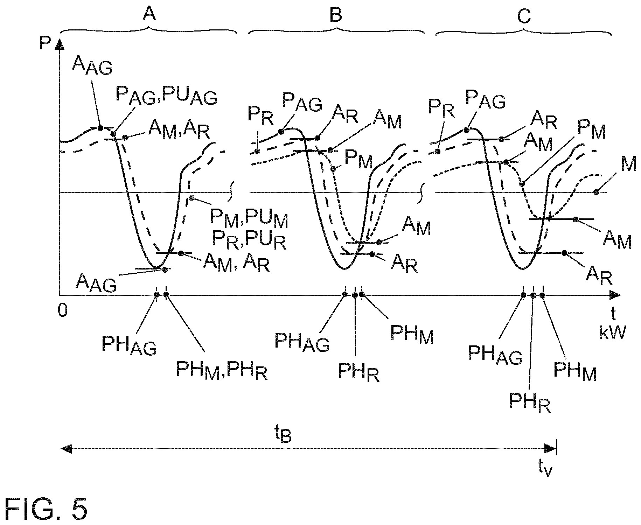

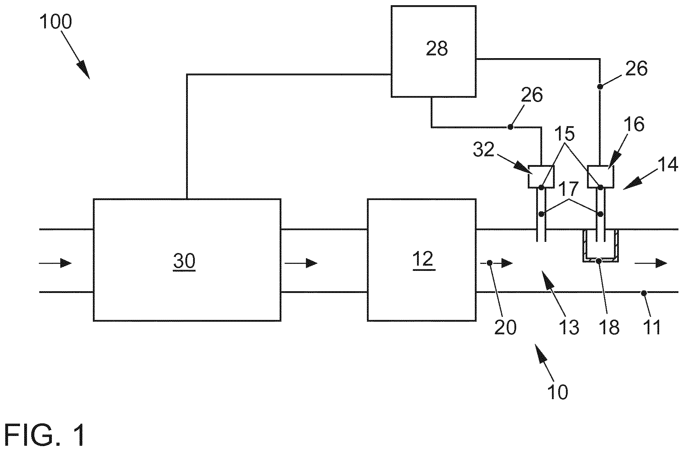

In Figur 5 ist ferner ein Druck P_{R} abgebildet, welcher eine aus einem Signal des Referenzsensors 32 abgeleitete Größe, also ein Zahlenwert mit einer Einheit eines Drucks ist.

Die in den Figuren 4 und 5 dargestellten Verläufe der Drücke P_{M} und P_{R} wurden gewonnen, indem nach einer Messung und Digitalisierung der Signale des Sensors 16 und des Referenzsensors 32 diese mittels eines digitalen Bandpassfilters mit variabler Mittenfrequenz gefiltert wurden. Die Mittenfrequenz ist dabei proportional zu einer Drehzahl der Verbrennungskraftmaschine 30, sodass sich die Mittenfrequenz bei einer Verdopplung der Drehzahl ebenso verdoppelt. Auch der tatsächliche Druck P_{AG} des Abgasstroms 20 wurde zur besseren Vergleichbarkeit mit den Drücken P_{M} und P_{R} so dargestellt, als ob dieser ebenfalls gefiltert wäre.

Zu einem Zeitpunkt t = 0 erfolgte eine Regeneration des Partikelfilters 12 und im Zuge dessen auch eine Regeneration des partikelaufnehmenden Materials 18 der Messvorrichtung 14. Prinzipiell ist alleine durch das partikelaufnehmende Material 18 auch ohne Rußbeladung eine Dämpfung der Pulsation PU_{AG} des Abgasstroms 20 gegeben. Da der Referenzsensor 32 nicht von einem partikelaufnehmenden Material abgeschirmt ist, entfällt hier eine entsprechende Dämpfung. Somit würde die Referenzpulsation PU_{R} des Drucks P_{R} eigentlich weitestgehend der Pulsation PU_{AG} entsprechen. Die dargestellte Referenzpulsation PU_{R} wurde jedoch derart korrigiert, dass sie der Pulsation PU_{M} bei einem unbeladenen, partikelaufnehmenden Material 18 entspricht. Dazu bedarf es auch einer Korrektur einer Dämpfung durch den Partikelfilter 12 und einer Phasenverschiebung durch einen Laufzeitunterschied, welcher sich aus der unterschiedlichen Position des Sensors 16 und des Referenzsensors 32 in der Abgasanlage 10 ergibt.

Durch die Korrektur entspricht der Verlauf des Drucks P_{M} im zeitlichen Bereich A weitestgehend dem Verlauf des Drucks P_{R}. Die Pulsationen PU_{M} und PU_{R} der Drücke P_{M} und P_{R} erreichen somit ungefähr zeitgleich ihre im Wesentlichen identischen Maxima.

Alternativ kann der Druck P_{R} auch ohne Verwendung eines Referenzsensors 32 allein durch ein Rechenmodell (ein Echtzeitmodell) und/oder Kennlinien bestimmt werden.

In einem zeitlichen Bereich B zeigt der Verlauf des Drucks P_{M} ein zum Bereich A abweichendes Verhalten. Durch die zwischenzeitliche Beladung des partikelaufnehmenden Materials 18 wird der Verlauf des Drucks P_{M} und somit die Pulsation PU_{M} gedämpft. Somit sind die Amplituden AM kleiner als die Amplituden A_{R}. Gleichzeitig weist eine Phasenlage PH_{M} der Pulsation PU_{M} zu einer Phasenlage PH_{R} der Referenzpulsation PU_{R} eine Phasenverschiebung in Richtung spät auf. Die Amplituden AM und A_{R} befinden sich in etwa in den Schnittpunkten der dargestellten Drücke P_{M} und P_{R} mit dem Druck P_{AG}.

Die Amplituden A_{AG} und A_{R} sowie die Phasenlage PH_{AG} und PH_{R} sind jedoch verglichen mit dem Bereich A konstant geblieben, da die Verbrennungskraftmaschine 10 im gleichen Betriebspunkt betrieben wird wie im Bereich A und da der Referenzsensor 32 kein partikelaufnehmendes Material aufweist.

Somit ist die Referenzpulsation PU_{R} des Drucks P_{R} in Bereich B gleich wie in Bereich A, während eine Pulsation PU_{M} des Drucks P_{M} in Bereich B verglichen mit Bereich A gedämpft und phasenverschoben ist.

Im zeitlichen Bereich C ist nach einer weiteren relevanten Beladung der Messvorrichtung 14 mit Partikeln eine nochmalige Dämpfung (und somit Verringerung der Amplitude AM) und Phasenverschiebung der Pulsation PU_{M} bei gleichbleibender Referenzpulsation PU_{R} und Pulsation PU_{AG} des Abgasstroms 20 erkennbar.

Die Pulsation PU_{M} des vom Sensor 16 ausgegebenen Signals, oder des daraus abgeleiteten Drucks P_{M} kann als eine Funktion der Amplituden AM und der Phasenlage PH_{M} angesehen und als ein Zahlenwert (ein Kennwert) angegeben werden. Dieser Zahlenwert kann sich bei kleiner werdenden Amplituden AM und/oder bei sich vergrößernder Phasenverschiebung PH_{M} verkleinern.

So kann die Pulsation PU_{M} und analog auch die Pulsation PU_{R} derart als Zahlenwerte dargestellt werden, dass ein großer Zahlenwert auf eine große Amplitude und/oder eine geringe Phasenverschiebung hindeutet. Diese Zahlenwerte bilden Eingangsgrößen 201 für den in Figur 3 dargestellten Verfahrensablauf.

Ein Vergleich der Pulsation P_{M} mit der Referenzpulsation P_{R} kann somit zum Beispiel mittels einer Verhältnisbildung 202 der Pulsationen PU_{M} und PU_{R} und einer anschließenden Entscheidung 204 durchgeführt werden. Zunächst wird entsprechend der Verhältnisbildung 202 die Pulsation PU_{M} zu der Referenzpulsation PU_{R} in Relation gesetzt. Dadurch erhält man ein Verhältnis V_{PU}, welches Aufschluss über eine Änderung der Pulsation PU_{M} zur Pulsation PU_{R} liefert.

Infolgedessen kann zunächst mittels einer Entscheidung 204 geprüft werden, ob das Verhältnis V_{PU} größer als 1 ist. Dies kann zum Beispiel auf ein entferntes partikelaufnehmendes Material 18 hindeuten und gemäß Schritt 203 signalisiert werden.

Anschließend kann gemäß einer weiteren Entscheidung 204 überprüft werden, ob das Verhältnis V_{PU} kleiner als ein Verhältnis-Grenzwert V_{G} ist. Wenn dies nicht der Fall ist, hat sich die Pulsation PU_{M} verglichen zur Referenzpulsation PU_{R} nicht relevant geändert, und das Verfahren bestätigt gemäß 206, dass der Partikelfilter 12 ordnungsgemäß funktioniert.

Sollte sich bei der Entscheidung 204 jedoch herausstellen, dass Verhältnis V_{PU} kleiner als der Verhältnis-Grenzwert V_{G} ist, so kann in einer folgenden Entscheidung 208 überprüft werden, ob ein Beladungs-Zeitintervall t_{B} kleiner als ein Beladungs-Zeitintervall-Grenzwert t_{G} ist. Dazu wurde zunächst in einem Schritt 207 festgelegt, dass ein Beladungs-Intervall I_{B} mittels des Beladungs-Zeitintervalls t_{B} realisiert wird. Das Beladungs-Zeitintervall t_{B} kann dabei das Zeitintervall zwischen der (thermischen) Regeneration zum Zeitpunkt t = 0 und einem Zeitpunkt der Verfahrensdurchführung tᵥ, also wie im gezeigten Fall angenommen, einem Zeitpunkt des Unterschreitens des Verhältnis-Grenzwerts V_{G} (oder nach dem Unterschreiten) sein.

Dadurch, dass das Beladungs-Intervall I_{B} mittels des Beladungs-Zeitintervalls t_{B} realisiert ist, fließt ein zeitliches Kriterium in die Bewertung des Zustands des Partikelfilters 12 mit ein. Alternativ oder zusätzlich könnte in die Bewertung zum Beispiel auch ein Beladungs-Massenintervall mit einfließen.

Der Beladungs-Zeitintervall-Grenzwert t_{G} kann in einem Schritt 205 zum Beispiel mittels eines Rechenmodells und/oder Kennlinien als Funktion f(BP) von während des Beladungs-Zeitintervalls t_{B} angefahrenen Betriebspunkten BP bestimmt werden. Dies ist sinnvoll, da sich eine Partikelrohemission der Verbrennungskraftmaschine 30 in Abhängigkeit der gewählten Betriebspunkte ändert.

Sollte das Beladungs-Zeitintervall t_{B} nicht kleiner als der Beladungs-Zeitintervall-Grenzwert t_{G} sein, hat sich die Pulsation PU_{M} verglichen zur Referenzpulsation PU_{R} zwar relevant geändert, jedoch erfolgte diese Änderung zu langsam, um auf ein Problem des Partikelfilters 12 hinzudeuten. Eine solch langsame Änderung kann beispielsweise durch einen normalen und zulässigen Partikelschlupf des Partikelfilters 12 erfolgen. Somit kann das Verfahren gemäß einem Funktionsbestätigungsschritt 206 bestätigen, dass der Partikelfilter 12 ordnungsgemäß funktioniert.

Wenn sich bei der Entscheidung 208 jedoch herausstellt, dass der Beladungs-Zeitintervall-Grenzwert t_{G} unterschritten wurde, ist die Änderung der Pulsation PU_{M} bezogen auf die Referenzpulsation PU_{R} derart schnell vonstattengegangen, dass auf einen unzulässig hohen Partikelschlupf geschlossen werden kann, was in einem Fehlerausgabeschritt 210 ausgegeben wird. Dementsprechend kann vom Steuergerät 28 ein Defekt des Partikelfilters 12 gemeldet werden.

Durch das obenstehende Verfahren 200 wird eine robuste Effizienzdiagnose des Partikelfilters 12 für niedrige Emissionsgrenzwerte gewährleistet, deren Basis eine Druckmessung im Abgasstrom 20 nach dem Partikelfilter 12 darstellt. Durch die Akkumulation der Partikel auf dem Material 18, also die direkte Erfassung von festen Bestandteilen (Partikelmasse) im Abgas, erhält das Verfahren 200 den Charakter einer Integralmessung.

Zusammenfassend kann also festgestellt werden, dass durch eine geeignete Auswertung der Änderung der Pulsation PU_{M} des Signals oder der daraus abgeleiteten Größe (Druck P_{M}) des Sensors 16 im Vergleich zu einer Referenzpulsation PU_{R} eines in einem Rechenmodell modellierten Werts oder eines zweiten, nicht mit einem partikelaufnehmenden Material versehenen Drucksensors (der Referenzsensor 32) auf die Effizienz des Partikelfilters 12 und/oder eine emittierte Partikelmasse im Abgas geschlossen werden kann. Dies kann unter Berücksichtigung der Betriebspunkte BP der Verbrennungskraftmaschine 30 und/oder des Fahrprofils des Kraftfahrzeugs 100 erfolgen.

Besonders vorteilhaft ist auch, dass das Verfahren bei beliebigen und auch konstanten Lastpunkten der Verbrennungskraftmaschine 10 durchgeführt werden kann.

Ferner ist eine Eigendiagnose der Messvorrichtung 14 möglich und somit eine Entfernung des partikelaufnehmenden Materials 18 (des Filtermaterials) detektierbar. Ein entferntes oder rissiges partikelaufnehmendes Material 18 äußert sich dadurch, dass die Amplituden A_{M} verglichen mit den Amplituden A_{R} unerwartet hoch und eine Phasenlage PH_{M} bezogen auf eine Phasenlage PH_{R} unerwartet früh ist.

Zur Durchführung des Verfahrens ist prinzipiell nur ein Sensor (ein Drucksensor) erforderlich, da es auch ohne zusätzlichen Referenzsensor 32 durchführbar ist. Ansonsten kann auch ein stromaufwärts des Partikelfilters 12 befindlicher Seriendrucksensor als Referenzsensor verwendet werden. Dadurch ist eine Abgasanlage 10 besonders kostengünstig realisierbar, da ein Seriendrucksensor (der Sensor 16) nur um das partikelaufnehmende Material, also um einen relativ kleinen Filter, zum Beispiel ein Edelstahlgewebe, erweitert werden muss, um eine Messvorrichtung 14 zu realisieren.

### Bezugszeichenliste

- 10: Abgasanlage
- 11: Abgaskanal
- 12: Partikelfilter
- 13: Hauptabgaspfad
- 14: Messvorrichtung
- 15: messempfindlicher Teil
- 16: Sensor
- 17: Leitung
- 18: partikelaufnehmendes Material
- 19: Ummantelung
- 20: Abgasstrom
- 21: Öffnung
- 22: Gehäuse
- 25: Messleitung
- 26: Schutzrohr
- 28: Steuergerät
- 30: Verbrennungskraftmaschine
- 32: Referenzsensor

- 100: Kraftfahrzeug
- 200: Verfahren
- 201: Eingangsgröße
- 202: Verhältnisbildung der Pulsationen
- 203: partikelaufnehmendes Material defekt oder entfernt
- 204: Entscheidung bezüglich Pulsation
- 205: Schritt zur Bestimmung des Beladungs-Zeitintervall-Grenzwert t_{G}
- 206: Funktionsbestätigungsschritt
- 207: Schritt der Beladungs-Intervall-Festlegung
- 208: Entscheidung bezüglich Beladungs-Zeitintervall
- 210: Fehlerausgabeschritt

- P_{AG}: Druck des Abgasstroms
- P_{M}: Druck aus Sensor
- P_{R}: Druck aus Referenzsensor
- t_{V}: Zeitpunkt der Verfahrensdurchführung
- I_{B}: Beladungs-Intervall
- t_{B}: Beladungs-Zeitintervall
- t_{G}: Beladungs-Zeitintervall-Grenzwert
- A, B, C: zeitlicher Bereich
- PU_{M}: Pulsation eines Signals des Sensors oder einer daraus abgeleiteten Größe
- PU_{R}: Referenzpulsation
- A_{M}: Amplitude der Pulsation des Signals des Sensors oder der daraus abgeleiteten Größe
- A_{R}: Amplitude der Referenzpulsation
- PH_{M}: Phasenlage der Pulsation des Signals des Sensors oder der daraus abgeleiteten Größe
- PH_{R}: Phasenlage der Referenzpulsation des Signals des Sensors oder der daraus abgeleiteten Größe
- V_{PU}: Verhältnis der Pulsationen
- V_{G}: Verhältnis-Grenzwert
- BP: Betriebspunkt
- F(): Funktion von
- j: ja
- n: nein

## Patentansprüche

1. Verfahren (200) zur Zustandsüberwachung eines in einem Abgaskanal (11) angeordneten Partikelfilters (12) mittels einer stromab des Partikelfilters (12) angeordneten Messvorrichtung (14), wobei die Messvorrichtung (14) einen Sensor (16) und ein partikelaufnehmendes Material (18) aufweist, welches den Sensor (16) von einem durch den Partikelfilter (12) strömenden Abgasstrom (20) zumindest teilweise separiert, wobei das Verfahren die folgenden Schritte umfasst:
- Beaufschlagen der Messvorrichtung (14) mit Abgas über ein Beladungs-Intervall (I_{B});
- Erfassen einer Pulsation (PU_{M}) eines Signals des Sensors (16) oder einer aus dem Signal abgeleiteten Größe (P_{M});
- Vergleichen der Pulsation (PU_{M}) mit einer Referenzpulsation (PU_{R});
- Bewerten des Zustands des Partikelfilters (12) in Abhängigkeit des Vergleichs und des Beladungs-Intervalls (I_{B}), **dadurch gekennzeichnet, dass**
- der Sensor (16) ein Drucksensor (16) ist.

2. Verfahren (200) nach Anspruch 1, **dadurch gekennzeichnet, dass** das Vergleichen der Pulsation (PU_{M}) mit der Referenzpulsation (PU_{R}) ein Vergleichen einer
- Amplitude (A_{M}) der Pulsation (PU_{M}) mit einer Amplitude (A_{R}) der Referenzpulsation (PU_{R}), und/oder
- Phasenlage (PH_{M}) der Pulsation (PU_{M}) mit einer Phasenlage (PH_{R}) der Referenzpulsation (PU_{R})
umfasst.

3. Verfahren (200) nach einem der vorhergehenden Ansprüche, **dadurch gekennzeichnet, dass** das Beladungs-Intervall (I_{B}) ein Beladungs-Zeitintervall (t_{B}), ein Beladungs-Wegintervall und/oder ein Beladungs-Massenintervall umfasst oder ist.

4. Verfahren (200) nach einem der vorhergehenden Ansprüche, **dadurch gekennzeichnet, dass** der Abgasstrom (20) von einer Verbrennungskraftmaschine (30) ausgestoßen wird und das Bewerten des Zustands des Partikelfilters (12) in Abhängigkeit von Betriebspunkten (BP) der Verbrennungskraftmaschine (30) und/oder in Abhängigkeit eines Fahrprofils eines die Verbrennungskraftmaschine (30) umfassenden Kraftfahrzeugs (100) erfolgt.

5. Verfahren (200) nach einem der vorhergehenden Ansprüche, **dadurch gekennzeichnet, dass** die Referenzpulsation (PU_{R}) mittels eines Referenzsensors (32), mittels Kennlinien und/oder eines Rechenmodells ermittelt wird.

6. Verfahren (200) nach einem der vorhergehenden Ansprüche, **dadurch gekennzeichnet, dass** bei einem unbeladenen partikelaufnehmenden Material die Referenzpulsation (PU_{R}) der Pulsation (PU_{M}) des Signals des Sensors (16) oder der Pulsation (PU) der aus dem Signal ermittelten Größe (P_{M}) entspricht.

7. Abgasanlage (10) umfassend einen in einem Abgaskanal (11) der Abgasanlage (10) angeordneten Partikelfilter (12) und eine stromab des Partikelfilters (12) angeordnete Messvorrichtung (14), wobei die Messvorrichtung (14) einen Sensor (16) und ein partikelaufnehmendes Material (18) aufweist, welches den Sensor (16) von dem Abgaskanal (11) zumindest teilweise separiert, **dadurch gekennzeichnet, dass** der Sensor (16) ein Drucksensor (16) ist, wobei die Abgasanlage (10) zur Durchführung des Verfahrens (200) nach einem der Ansprüche 1 bis 6 eingerichtet ist.

8. Messvorrichtung (14) zur Durchführung des Verfahrens (20) nach einem der Ansprüche 1 bis 6 und/oder für eine Abgasanlage (10) nach Anspruch 7, wobei die Messvorrichtung (14) einen Sensor (16) und ein partikelaufnehmendes Material (18) umfasst, welches einen messempfindlichen Teil (15) des Sensors (16) abschirmt, wobei der Sensor (16) ein Drucksensor (16) ist und die Messvorrichtung (14) ferner eine Leitung (17) zum Verbinden eines messempfindlichen Teils (15) des Sensors (16) mit einem Abgaskanal (11) umfasst,
**dadurch gekennzeichnet, dass** eine Öffnung (21) in die Leitung (17) von dem partikelaufnehmenden Material (18) ummantelt ist.

9. Messvorrichtung (14) nach Anspruch 8, **dadurch gekennzeichnet, dass** das partikelaufnehmende Material (18) Öffnungen durch die Ummantelung (19) ausbildet, welche durch eine Beladung des partikelaufnehmenden Materials (18) mit Partikeln aus dem Abgasstrom (20) verschließbar sind.

## Claims

1. Method (200) for monitoring the state of a particulate filter (12) arranged in an exhaust gas duct (11), by means of a measuring device (14) arranged downstream of the particle filter (12), wherein the measuring device (14) has a sensor (16) and a particle-absorbing material (18) which at least partially separates the sensor (16) from an exhaust gas stream (20) flowing through the particle filter (12), wherein the method comprises the following steps:
- applying exhaust gas to the measuring device (14) over a loading interval (I_{B}) ;
- detecting a pulsation (PU_{M}) of a signal of the sensor (16) or a variable (P_{M}) derived from the signal;
- comparing the pulsation (PU_{M}) with a reference pulsation (PU_{R}) ;
- evaluating the state of the particle filter (12) as a function of the comparison and the loading interval (I_{B}), **characterized in that**
- the sensor (16) is a pressure sensor (16).

2. Method (200) according to Claim 1, **characterized in that** the comparison of the pulsation (PU_{M}) with the reference pulsation (PU_{R}) comprises comparing
- an amplitude (A_{M}) of the pulsation (PU_{M}) with an amplitude (A_{R}) of the reference pulsation (PU_{R}) and/or
- a phase angle (PH_{M}) of the pulsation (PU_{M}) with a phase angle (PH_{R}) of the reference pulsation (PU_{R}).

3. Method (200) according to one of the preceding claims, **characterized in that** the loading interval (I_{B}) comprises or is a loading time interval (t_{B}), a loading travel interval and/or a loading mass interval.

4. Method (200) according to one of the preceding claims, **characterized in that** the exhaust gas flow stream (20) is expelled from an internal combustion engine (30), and the evaluation of the state of the particle filter (12) occurs as a function of operating points (BP) of the internal combustion engine (30) and/or as a function of a driving profile of a motor vehicle (100) comprising the internal combustion engine (30).

5. Method (200) according to one of the preceding claims, **characterized in that** the reference pulsation (PU_{R}) is determined by means of a reference sensor (32), by means of characteristic curves and/or a computing model.

6. Method (200) according to one of the preceding claims, **characterized in that** in the case of an unloaded particle-absorbing material, the reference pulsation (PU_{R}) of the pulsation (PU_{M}) of the signal of the sensor (16) or of the pulsation (PU) corresponds to the variable (P_{M}) derived from the signal.

7. Exhaust system (10) comprising a particle filter (12) arranged in an exhaust gas duct (11) of the exhaust system (10), and a measuring device (14) arranged downstream of the particle filter (12), wherein the measuring device (14) has a sensor (16) and a particle-absorbing material (18) which at least partially separates the sensor (16) from the exhaust gas duct (11), **characterized in that** the sensor (16) is a pressure sensor (16), wherein the exhaust system (10) is configured to carry out the method (200) according to one of Claims 1 to 6.

8. Measuring device (14) for carrying out the method (20) according to one of Claims 1 to 6 and/or for an exhaust system (10) according to Claim 7, wherein the measuring device (14) comprises a sensor (16) and a particle-absorbing material (18) which screens a part (15) of the sensor (16) which is sensitive in terms of measurement, wherein the sensor (16) is a pressure sensor (16) and the measuring device (14) also has a line (17) for connecting a part (15) of the sensor (16) which is sensitive in terms of measurement to an exhaust gas duct (11), **characterized in that** an opening (21) into the line (17) is encased by the particle-absorbing material (18).

9. Measuring device (14) according to Claim 8, **characterized in that** the particle-absorbing material (18) forms openings through the casing (19), which openings can be closed by loading of the particle-absorbing material (18) with particles from the exhaust gas stream (20).

## Revendications

1. Procédé (200) de surveillance de l'état d'un filtre à particules (12) disposé dans un conduit de gaz d'échappement (11) au moyen d'un dispositif de mesure (14) disposé en aval du filtre à particules (12), dans lequel le dispositif de mesure (14) comporte un capteur (16) et un matériau (18) absorbant les particules, qui sépare au moins partiellement le capteur (16) d'un flux de gaz d'échappement (20) s'écoulant à travers le filtre à particules (12), dans lequel le procédé comprend les étapes consistant à :
- exposer le dispositif de mesure (14) au gaz d'échappement au cours d'un intervalle de chargement (I_{B}) ;
- détecter une pulsation (PU_{M}) d'un signal du capteur (16) ou d'une grandeur (P_{M}) dérivée dudit signal ;
- comparer la pulsation (PU_{M}) à une pulsation de référence (PU_{R}) ;
- évaluer l'état du filtre à particules (12) en fonction de la comparaison et de l'intervalle de chargement (I_{B}), **caractérisé en ce que**
- le capteur (16) est un capteur de pression (16).

2. Procédé (200) selon la revendication 1, **caractérisé en ce que** la comparaison de la pulsation (PU_{M}) à la pulsation de référence (PU_{R}) consiste à comparer
- une amplitude (A_{M}) de la pulsation (PU_{M}) à une amplitude (A_{R}) de la pulsation de référence (PU_{R}), et/ou
- une position de phase (PH_{M}) de la pulsation (PU_{M}) à une position de phase (PH_{R}) de la pulsation de référence (PU_{R}).

3. Procédé (200) selon l'une quelconque des revendications précédentes, **caractérisé en ce que** l'intervalle de chargement (I_{B}) comprend ou est un intervalle de temps de chargement (t_{B}), un intervalle de distance de chargement et/ou un intervalle de masse de chargement.

4. Procédé (200) selon l'une quelconque des revendications précédentes, **caractérisé en ce que** le flux de gaz d'échappement (20) est expulsé par un moteur à combustion interne (30) et **en ce que** l'évaluation de l'état du filtre à particules (12) est effectuée en fonction de points de fonctionnement (BP) du moteur à combustion interne (30) et/ou en fonction d'un profil de conduite d'un véhicule automobile (100) comprenant le moteur à combustion interne (30).

5. Procédé (200) selon l'une quelconque des revendications précédentes, **caractérisé en ce que** la pulsation de référence (PU_{R}) est déterminée au moyen d'un capteur de référence (32), au moyen de courbes caractéristiques et/ou d'un modèle de calcul.

6. Procédé (200) selon l'une quelconque des revendications précédentes, **caractérisé en ce que**, lorsqu'un matériau absorbant les particules n'est pas chargé, la pulsation de référence (PU_{R}) correspond à la pulsation (PU_{M}) du signal du capteur (16) ou à la pulsation (PU) de la grandeur (P_{M}) déterminée à partir dudit signal.

7. Système de gaz d'échappement (10) comprenant un filtre à particules (12) disposé dans un conduit de gaz d'échappement (11) du système de gaz d'échappement (10) et un dispositif de mesure (14) disposé en aval du filtre à particules (12), dans lequel le dispositif de mesure (14) comporte un capteur (16) et un matériau (18) absorbant les particules, qui sépare au moins partiellement le capteur (16) du conduit de gaz d'échappement (11), **caractérisé en ce que** le capteur (16) est un capteur de pression (16), dans lequel le système de gaz d'échappement (10) est conçu pour mettre en oeuvre le procédé (200) selon l'une quelconque des revendications 1 à 6.

8. Dispositif de mesure (14) destiné à mettre en oeuvre le procédé (20) selon l'une quelconque des revendications 1 à 6 et/ou destiné à un système de gaz d'échappement (10) selon la revendication 7, dans lequel le dispositif de mesure (14) comprend un capteur (16) et un matériau (18) absorbant les particules, qui protège une partie (15) du capteur (16) qui est sensible à la mesure, dans lequel le capteur (16) est un capteur de pression (16) et le dispositif de mesure (14) comprend en outre une conduite (17) destinée à relier la partie sensible à la mesure (15) du capteur (16) à un conduit de gaz d'échappement (11), **caractérisé en ce qu'**une ouverture (21) est enveloppée, dans la conduite (17), par le matériau (18) absorbant les particules.

9. Dispositif de mesure (14) selon la revendication 8, caractérisé en que le matériau (18) absorbant les particules forme, à travers l'enveloppe (19), des ouvertures qui peuvent être refermées lorsque le matériau (18) absorbant les particules est chargé de particules provenant du flux de gaz d'échappement (20).
